(19) Europäisches Patentamt
European Patent Office
Office européen des brevets

(11) **EP 4 610 888 A1**

(12) **EUROPEAN PATENT APPLICATION**

(43) Date of publication:
**03.09.2025 Bulletin 2025/36**

(21) Application number: **24197463.3**

(22) Date of filing: **30.08.2024**

(51) International Patent Classification (IPC):
**G06N 3/091** (2023.01)     **G06N 20/00** (2019.01)

(52) Cooperative Patent Classification (CPC):
**G06N 20/00; G06N 3/091**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2024 EP 24160770**

(71) Applicants:
• **Continental Automotive Technologies GmbH**
 **30175 Hannover (DE)**
• **AUMOVIO Autonomous Mobility Germany GmbH**
 **85057 Ingolstadt (DE)**

(72) Inventors:
• **Kassem Sbeyti, Moussa**
 **30175 Hannover (DE)**
• **Dr. Karg, Michelle**
 **88131 Lindau (DE)**
• **Dr. Wirth, Christian**
 **30175 Hannover (DE)**

(74) Representative: **Aumovio Corporation**
 **Continental Automotive**
 **Technologies GbH**
 **Putzbrunner Straße 69**
 **81739 München (DE)**

(54) **APPARATUS, OBJECT DETECTOR, DATA, DATA CARRIER, COMPUTER PROGRAM, AND METHOD FOR ACTIVE LEARNING FOR AN OBJECT DETECTOR**

(57)     Embodiments of the present disclosure relate to an apparatus, an object detector, data, a data carrier, a computer program, and a method for active learning for an object detector. The method comprises obtaining a training data set for training the object detector, obtaining a reference data set for testing the training object detector, and determining a similarity of the training data set and the reference data set to estimate a performance of the object detector for the reference data set.

100

Fig. 1

EP 4 610 888 A1

**Description**

Embodiments of the present disclosure relate to an apparatus, an object detector, data, a data carrier, a computer program, and a method for active learning for an object detector. In particular, embodiments of the present disclosure relate to a concept for evaluating the performance of an object detector for a training data set and selecting suitable or appropriate training data set for active learning.

Active learning (AL) is applied widely in various fields of technology and science, e.g., for labeling (training) data. Labeling data typically requires a significant investment of time and money, and it is prone to errors due to its manual nature. One of the established methods to reduce labeling efforts is Active learning. Given the substantial data demand for training in state-of the-art object detectors, AL proves particularly advantageous in this context. Despite most works on AL in object detection predominantly relying on two widely used and well-curated datasets, PASCAL VOC and MSCOCO, state-of-the-art methods exhibit inconsistent performance across various works. Therefore, the best AL approach remains unclear. This inconsistency can be attributed to differences in models, training strategies, defined AL settings, and, notably, the evaluation protocol. Instead of focusing on developing a novel active learning method that boosts performance over state-of-the-art, new works are emerging that tackle the issue of reliable evaluation. An approach for more reliable evaluation is to use an A/B test with cross-validation, which, in essence, cross-evaluates the AL models on multiple different data scenarios such as night and day images. They find that the initial test set does not capture all possible real-world conditions and, therefore, is not sufficiently reliable. Other approaches are where all state-of-the-art AL methods are compared under the same training and evaluation settings and are found to be inconsistent in comparison to the original results. Some approaches increase reliability by focusing on rare slices that might cause strong performance changes in the evaluation. Additionally, AL for object detection on real-world data is computationally costly due to the model complexity and data resolution. One approach to accelerate AL is via continuous training, avoiding training from scratch for every iteration and, therefore, significantly reducing computational complexity.

The AL for object detection remains ambiguous due to variations in training and evaluation strategies across prior works preventing definitive conclusions.

The successful deployment of object detectors in practical scenarios depends on their ability to generalize effectively to diverse and unpredictable situations. An increased volume of data usually enhances generalization, especially with careful curation. However, leveraging large amounts of data for training object detectors poses two primary challenges. The first challenge is selecting relevant data samples despite high redundancy, misleading scenarios, and variations in weather and terrain conditions. The second challenge is labeling the selected data, with manual labeling being an expensive, time-consuming, and error-prone task. In response, various strategies such as AL have emerged. While AL has proven effective in many tasks including classification, its extension to object detection still encounters challenges due to the inherently complex nature of the task. AL strategies in object detection broadly fall into two main categories depending on the definition of the informativeness of a sample. This definition can either revolve around the uncertainty associated with the predictions of the current model when processing a sample, or the diversity that sample adds concerning the existing labeled data, or a combination of both. The present disclosure focuses on uncertainty-based AL, whose definition and estimation methods are well-established, in contrast to the concept of diversity that may vary depending on the specific AL approach and application domain. Multiple works on AL argue for the potential benefit of distinguishing between aleatoric (data), epistemic (model), localization and classification uncertainties. However, the assumption that the uncertainty of a model on an input reflects on its informativeness only holds if the uncertainty is reliable, hence highlighting the importance of uncertainty calibration. Furthermore, real-world datasets naturally exhibit class imbalances stemming from the unequal frequencies of different classes in reality. Relying only on uncertainty for sample selection could exacerbate this imbalance and potentially harm performance by prioritizing problematic samples regardless of their class. Thus, the importance of class balancing is also emphasized. Focusing on uncertainty-based AL for object detection, the present disclosure investigates the separation hypothesis, uncertainty calibration, and class balancing on real-world autonomous driving datasets, as these aspects have not been yet adequately addressed in existing works.

While the training strategy of AL is essential, it is also arguably crucial to consider the evaluation strategy. However, most works on AL in object detection predominantly rely on two well-curated datasets, PASCAL VOC and MSCOCO.

To summarize, previous studies either retest existing AL methods on common datasets and settings or create specialized test benches for specific use cases, but these approaches lack generalizability and are costly. The best AL approach remains unclear. Additionally, while efforts have been made to accelerate active learning, AL iterations remain expensive.

Hence, there may be a demand for an improved concept for active learning.

This demand may be satisfied by embodiments of the present disclosure.

The present disclosure investigates AL from a real-world perspective across three autonomous driving datasets, including the roles of uncertainty, calibration, and class balance. One of the targets of AL - maximizing informativeness in a selected training set - can be framed as maximizing the similarity between the AL training set and the entire data pool. Furthermore, it is proposed that the similarity between the evaluation set and the pool correlates with the reliability of the ranking of AL methods on it. Therefore, the present disclosure introduces a novel approach to quantify similarity, allowing to predict the performance of an AL method based on its selected training set, while also identifying reliable evaluation sets. This work marks the first attempt to align the training and evaluation strategies in AL under a uniform concept, which is crucial for ensuring the generalizability of a comparison among AL methods, accelerating their deployment, and promoting the practical applicability of AL in the real-world.

Meanwhile, our work utilizes three autonomous driving datasets, including one featuring domain shift and out-of-distribution objects, hence offering a practical viewpoint on the effectiveness of AL. Furthermore, the performance of state-of-the-art AL methods is found inconsistent across various training and evaluation strategies. Hence, recent works are shifting the focus towards addressing the lack of reliability of AL results. The proposed approach suggests that the criteria used to define the evaluation strategy should also guide the training strategy. To achieve this, a similarity-based AL is introduced with a novel method that analyzes both the training and evaluation sets in AL. Embodiments of the proposed approach are based on a class count ratio and distribution of three image-based metrics calculated per class over image crops of detections in training sets. It is therefore universal and involves post-hoc analysis of a selected training set rather than its identification. Present disclosure demonstrates the proposed concept by showcasing a positive correlation between the performance of an AL approach and the similarity between its selected training set and the entire data pool. It further shows that the similarity between the evaluation set and the data pool positively correlates with the reliability of the results obtained on it. The proposed approach to measure similarity aims to simultaneously streamline the development and deployment of AL methods, addressing the computational cost of AL that is highlighted by previous works, while also enhancing the reliability of the conventional evaluation strategy for AL. Contributions of the present disclosure can be summarized as follows:

- The present disclosure investigates the separation hypothesis regarding aleatoric, epistemic, localization, and classification uncertainties, as well as class balancing and calibration for object detection from a real-world perspective, and shows that uncertainty is only a useful indication of informativeness if reliable.

- It suggests that the informativeness of an AL training set correlates with its similarity to the entire pool and introduce a novel approach to quantify it. This is substantiated by a demonstration that the proposed approach consistently predicts the performance of an AL method.

- The present disclosure highlights the potential for inconsistency in AL results within the current evaluation strategy on real-world datasets with and without a domain shift, and introduces a concept based on the proposed similarity-based approach to enhance the evaluation reliability. In total, embodiments of the proposed approach may encompass various stages of an AL pipeline, spanning from selection and training to evaluation and deployment.

A common understanding of AL is that it allows the identification of informative samples. However, recent works diverge on the definition of informativeness. Many works assume that it translates to selecting samples with the highest induced uncertainty since samples that provide new information to the model (e.g., in object detector) will increase its uncertainty. Others consider it equivalent to diversity since diverse samples will generally contain a broader spectrum of information. Alternative definitions include difficulty via loss prediction on unlabeled data, localization agreement by analyzing the disagreement between anchor boxes, and localization stability post-corruption with Gaussian noise. The ongoing discussion regarding how to quantify informativeness remains apparent. Concerning uncertainty, several works propose the separation of the localization and classification uncertainties, finding that classification uncertainty is sufficiently descriptive, even in object detection. Other works observed that uncertain examples in classification can offer valuable insights provided accurate uncertainty estimation is feasible, thereby highlighting the importance of calibration. Existing approaches propose to calibrate the classification confidences and introduce diversity via clustering based on feature maps, since certain features common to all images, such as crowds or night scenes, may induce high uncertainty in the batch. Other works argue that diversity and uncertainty may prove ineffective for selecting rare classes, which constitute a small portion of the data with minimal impact on overall accuracy, especially in datasets related to autonomous driving with classes such as cars vs motorcycles. Thus, they advocate for class balancing, achievable through techniques such as class-weighting loss, weighting of classes in the scoring function based on the number of instances and classes, and consideration of the distance between class distributions in the selected set and labeled set. Therefore, informativeness appears to be influenced by several factors, which is shown in the present disclosure on multiple autonomous driving datasets, including one featuring corner cases and domain shift as a test set, as the proposed approach aims to shed light on the potential of AL for real-world applications. Additionally, it is proposed to apply several strategies for enhancing AL for object detection, such as uncertainty calibration, class balancing, and diversity-aware pool pruning. Other approaches point out that a valid metric for informativeness should ensure that information decreases over AL iterations and that the information in the selected set of each iteration surpasses that in the labeled set to enhance performance. Building on this premise, the question remains on how to quantify the information content in a set? In this work, it is proposed to connect informativeness to the concept of similarity and apply a novel method to measure it.

One challenge is the selection of instances that are specific to rare events. Other approaches do so by extracting images from the unlabeled set that are semantically similar to the regions of interest in the query set. For that, they use submodular mutual information functions, which measure the amount of information in the data. Some approaches tackle the distribution bias between labeled and unlabeled instances by minimizing prediction discrepancies and aligning features through an adversarial classifier setting, thereby increasing their similarity. In contrast, the present approach, focusing on evaluating the similarity between a set and the pool, proves to be efficient and well-suited for object detection as it involves solely the computation of metrics derived from image crops surrounding the detections. Furthermore, it simultaneously addresses the potential of inconsistent evaluation advocate for a more robust evaluation strategy in AL that encompasses a broader spectrum of datasets, ranging from low- to large-budget regimes. Embodiments of the present disclosure use a similarity-based approach to enhance reliability without necessitating any additional data collection or labeling for the evaluation sets.

In general words, embodiments of the present disclosure provide method for active learning for an object detector. The method comprises obtaining a training data set for training the object detector, obtaining a reference data set for testing the training object detector, and determining a similarity of the training data set and the reference data set to estimate a performance of the object detector for the reference data set.

The proposed approach provides one or more of the following advantages:

- Streamlined AL method selection: By estimating performance beforehand, the proposed concept reduces computational expenses and save human resources, time, and financial resources.
- Enhanced and automated evaluation of AL methods: No additional labeling or human involvement is required, ensuring a more reliable assessment process. • Foundation for future AL implementations within Continental, adaptable to various use cases and applications.
- Simple implementation process, facilitating integration into existing systems

Accordingly, in some embodiments the method further comprises predicting a performance of the trained object detector for the reference data set based on the similarity.

In practice, obtaining the similarity may comprise obtaining one or more crops of one or more object classes in the training data set and the reference data set and the similarity may be indicative of a similarity of crops of the same object class. In this way, the amount of data to be processed and, thus, the computational effort may be reduced.

The similarity may be indicative of a similarity of the crops in a spatial domain and/or a frequency domain.

In some embodiments, the similarity is indicative of a similarity of a class distribution/count ratio, an aspect ratio, a color histogram, and/or a discrete cosine transform of the crops.

In particular, the similarity may be indicative of a class-specific similarity. In this way, a class count may be considered in the proposed evaluation.

For example, to this end, the class-specific similarity is weighted based on an occurrence rate of a respective object class. For example, the weight of the class-specific similarity is higher if the occurrence rate of the respective object class is higher and vice versa for a better comparability of the data sets.

Optionally, an object class is disregarded if a respective occurrence rate is less than a predefined threshold. In this way, rare object classes cannot distort the proposed comparison of datasets.

In practice, may be the method is applied for multiple training data sets, and the method further comprises selecting, based on the similarity, a training data set for active learning. In doing so, a favorable or the best training data set may be selected for active learning.

As well, the method may further comprise selecting from the reference data set, based on the similarity, a subset of samples for estimating a performance of the object detector. This, e.g., allows to identify a subset exhibiting higher similarity to the training data set than the original, thus facilitating a more dependable evaluation under the assumption that both the training data set and the reference set are representative of the real world.

Further embodiments provide a computer program comprising instructions which, when the computer program is executed by a computer, cause the computer to carry out an embodiment of the proposed method.

Further embodiments provide a computer-readable data carrier having stored thereon the computer program. The data carrier may comprise or correspond to any medium capable of storing or transmitting digital data that can be read by a computer. This includes physical devices like hard drives, USB drives, CDs, DVDs, and also includes non-physical media such as cloud storage and data streams.

Further embodiments provide an object detector obtainable by an embodiment of the proposed method.

Embodiments of the present disclosure may also provide data obtainable by an embodiment of the proposed method

Other embodiments may provide an apparatus comprising one or more interfaces for communication and a data processing circuit configured to execute an embodiment of the proposed method.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings

Fig. 1 shows a flow chart schematically illustrating an embodiment of a method for active learning for an object detector;

Fig. 2 exemplarily illustrates the proposed similarity-based approach; and

Fig. 3 shows a block diagram schematically illustrating an embodiment of an apparatus according to the proposed approach.

As outlined above, previous approaches either retest existing AL methods on common datasets and settings or create specialized test benches for specific use cases, but these approaches lack generalizability and are costly. The best AL approach remains unclear. Additionally, while efforts have been made to accelerate active learning, AL iterations remain expensive.

The present disclosure provides a solution addressing such shortcomings of active learning. Further details and aspects are now described below with reference to the appended drawings.

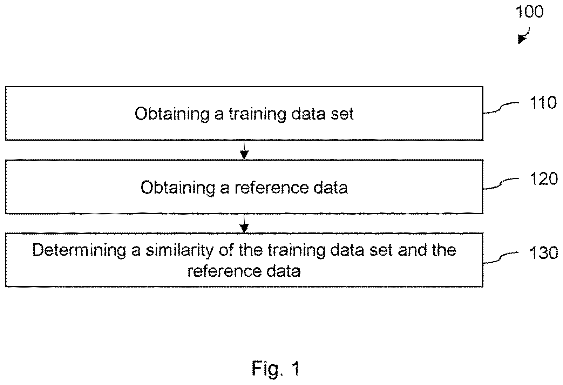

Fig. 1 shows a flow chart schematically illustrating an embodiment of a method 100 for active learning for an object detector.

Method 100 may comprise or may be divided in multiple steps. In particular, embodiments of method 100 comprise obtaining a training data set (also referred to herein as "comparison set" or "training set") for training the object detector.

In practice, the object detector is trained based on a labelled training data set comprising images paired with annotations. For object detectors, the training data set may comprise synthetic and/or real image data including one or more images together with labels for different objects. The image data may particularly contain images of application-specific objects or objects of interest, labeled with their corresponding categories (e.g., "cat," "car") and precise locations, often defined by bounding boxes. For automotive applications, the image data, e.g., includes images of traffic environments including (different) roads, vehicles, infrastructure objects, and/or the like.

Bounding boxes may be represented by coordinates that specify positions of their corners or of a center point together with width and height. The dataset is usually divided into training, validation, and test sets. For example, in some data sets, images are annotated with object categories and bounding boxes, enabling the model/object detector to learn to detect objects across various scenes. In other data sets, images are labeled with objects and their locations.

The training data set is used to teach the object detector by adjusting its parameters based on sample images and corresponding labels. As well, the training data set may comprise a validation data set. The validation dataset may be a smaller, separate subset used during training to fine-tune the object detector, helping to prevent overfitting by evaluating performance on unseen data. For example, it guides decisions like hyperparameter tuning.

After training the object detector, a reference data set (also referred to herein as "test data set"), unseen during training, may be used to objectively assess the object detector's final performance. Preferably, the reference data set represents a use case of the object detector, for automotive applications, e.g., a traffic environment of a vehicle using the object detector. Embodiments of the present disclosure are based on the finding that the object detector's performance may heavily rely on a similarity of the training data set and the reference data set representing the desired use case.

The method 100 comprises obtaining 120 a reference data set (also referred to herein as "reference set" or "evaluation set") for testing the trained object detector and determining 130 a similarity of the training data set and the reference data set to estimate a performance of the object detector for the reference data set.

In this way, the suitability of the training data set may be determined in view of the obtained reference data set. For example, the higher the similarity (i.e., the more similar the training data set is to the reference data set), the more suitable is the training data set. In practice, this allows to determine the suitability for different training data that's in order to determine a favorable and/or the most suitable training data set for an object detector in view of a desired application.

So, the method 100 may further comprise predicting a performance of the trained object detector for the reference data set based on the similarity.

A skilled person having benefit from the present disclosure will appreciate that the similarity may be determined by different metrics considering different comparable features or parameters of the training data set and the reference data set. In practice, the similarity, e.g., is obtained based on a comparison of objects represented in the training data set in the reference data set. In particular, the similarity may be determined based on a color, a texture, and/or shape of the objects. Additionally or alternatively, a structural similarity index, cosine distance between features extracted via a feature extraction model (e.g., the VGG-16 model), brightness, contrast, hash values, and/or additional bounding box information, such as area. Optionally, object classes of the training data set and the reference data set may be compared to determine the similarity.

In embodiments, the similarity may be obtained based on a deviation of the reference data set into training data set regarding one or more features or parameters. For example, if the deviation in terms of color, texture, and/or shape of objects is larger, similarity is lower and vice versa.

The training data set and/or the reference data set may be obtained from publicly accessible sources and/or may be generated upfront.

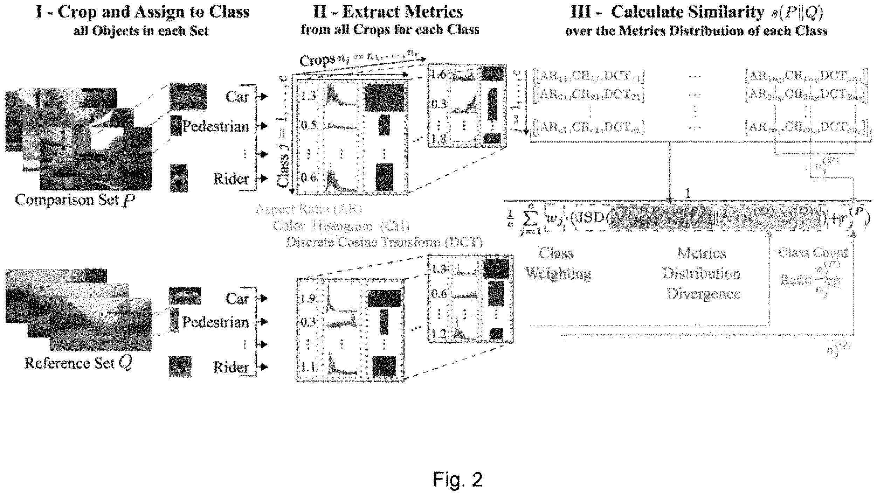

Further aspects and details of embodiments of the proposed approach are explained in more detail below with reference to Fig. 2.

Similarity-based Active Learning

As mentioned before, the present disclosure is based on the finding that the performance of an AL training set and the reliability of an evaluation set both rely on their similarity to a data pool to which the object detector is applied, e.g., for labelling.

Fig. 2 exemplarily illustrates an embodiment of the similarity-based approach.

Pool-based active learning may follow an interactive setting on a pre-defined labeling budget $b \in \mathbb{N}_{>0}$ with also a pre-defined number of iterations $n \in \mathbb{N}_{>0}$ with $n \leq b$. Given a pool $D_{pool}$ with a size $n_{D_{pool}} \geq b$, a labeled subset at iteration $i$ for $i = 1 \dots n$ is denoted as $X_l^i \subseteq D_{pool}$ with the corresponding labels $Y_l^i$ and unlabeled subset at iteration $i$ as $X_u^i \subseteq D_{pool}$. With a pre-defined number of samples at iteration 0 and an initial model, each following iteration comprises predicting on $X_u^i$, selecting the $b/n$ most informative samples for the model from $X_u^i$, labeling them by an Oracle, and adding them to ( $X_l^i, Y_l^i$ ), which results in ( $X_l^{i+1}, Y_l^{i+1}$ ) as new training set at iteration $i + 1$. The validation and test sets denoted by ($X_{val}$, $Y_{val}$) and ($X_{test}$, $Y_{test}$), respectively, are selected and labeled from $D_{pool}$ before any iteration and remain fixed.

Correlation between similarity and performance

In some embodiments, the method further comprises selecting from the reference data set, based on the similarity, a subset of samples for estimating a performance of the object detector. For this, one can identify a subset $\lfloor \frac{b}{n} \rfloor$ of $X_u^i \subseteq D_{pool}$ at every iteration $i$ that maximizes the similarity between $X_l^{i+1}$ and $D_{pool}$, that is, $\max \left( s(x_l^{i+1} || D_{pool}) \right)$. In some embodiments, the similarity is based on the multivariate Jensen-Shannon divergence (JSD), more specifically based on the inverse thereof, with its calculation process illustrated in Fig. 2. Calculating the similarity $s$ may require labels, as it may be computed per-class. So, the similarity may be indicative of a class-specific similarity. The similarity $s$ between the training set $X_l^i$ ("comparison set $P$") at iteration $i$ and $D_{pool}$ ("reference set $Q$") can be inferred by the similarity between $X_l^i$ and the validation set $X_{val}$ as an alternative reference set $Q$ which is already labeled. As a result, the performance of an active learning method on $X_{val}$, typically measured via the mean average precision (mAP), positively correlates with the similarity of the selected set by that method $s(X_l^i || X_{val})$. This holds under the assumption that $X_{val}$ it is representative of $D_{pool}$ which may be the case in some evaluation strategies where $X_{val}$ may serve as the evaluation set for active learning. Hence, this also emphasizes the significance of the selection of the validation set.

Correlation between similarity and evaluation reliability

It is proposed to measure the reliability of an evaluation of active learning methods on $X_{val}$ via the Kendall's tau rank correlation coefficient $\tau$ between a ranking of the methods on $X_{val}$ and another evaluation set such as $X_{test}$. Alternatively other arbitrary correlations may be used instead of the Kendall's tau rank correlation.

Since performance and similarity are positively correlated to each other, higher correlation and the singular ranks of active learning methods on two different labels evaluation sets, one of which may be $X_{val}$, is indicative of higher generalization on $D_{pool}$ and, therefore, high reliability of the evaluation set $X_{val}$. In case, the ranking of the active learning methods on $X_{val}$, proves inconsistent and other sets such as $X_{test}$, and indicating a potential unreliability of $X_{val}$, it is suggested that a more reliable validation set may be obtained by identifying one or more suitable subsets $X_{val,subset} \subseteq X_{val}$ with $s(X_{val}\|X_{test}) \leq s(X_{val,subset}\|X_{test})$. Let there be $z$ subsets denoted as $X_{val,subset}^1, \ldots, X_{val,subset}^z$, ordered according to their similarity to $X_{test}$ (measured by $s(X_{val,subset}^l \| X_{test})$, $l = 1, \ldots, z$). The subsets $z$ may be determined manually based on a size of $X_{val}$ and available computational resources. Optionally, the subsets may be determined automatically base and similarity. In practice, the subsets may be selected based on a threshold $\delta_S$ for the similarity such that only subsets having a similarity higher than a threshold are selected. Such threshold-based selection may be particularly applied if the highest similarities are close to each other (i.e., closer than a predefined threshold) relative to a median similarity $\tilde{s}$ across all subsets. In embodiments, the threshold for the similarity may be configured dynamically such that less subsets are selected if the highest similarities (e.g., $s_z$ and $s_{z-1}$) deviate more from each other and vice versa. This adaptive approach may improve the identification of subsets with notably high similarity to $X_{test}$ true subsampling. The threshold may be shifted by a manually defined constant $C_{\delta_1}$ If the difference of the top two similarities exceeds a bound relative to $\tilde{s}$ over the $z$ subsets controlled by $C_{\delta_2}$. So, $\delta_S$ may be defined as:

$$\delta_S = \begin{cases} C_{\delta_1} \cdot \tilde{s} \text{ if } s_z - s_{z-1} > C_{\delta_2} \cdot \tilde{s} \\ \text{otherwise } \tilde{s} \end{cases}$$

Once the evaluation subsets are filtered via the threshold, a robust performance indicator the 75th percentile $Q3$ (mAP) on the filtered subsets is selected, providing a reliable indication of where the mAP of that active learning method lies in 75% of cases, hence avoiding outlier performance on one side.

Quantifying similarity

Real-world datasets often have redundant information within and across multiple images in a batch (i). Object detectors are typically assessed using the mAP, which averages the detection accuracy per object class (ii). Embodiments of the present disclosure therefore proposed to measure the similarity based on object crops for each class. This approach enables prioritizing performance-relevant features over background information, while also reducing computation time by working with lower resolution. To assess the similarity between two or more sets of images, it is proposed to first extract the crops of each object class within these sets. Then, the multivariate JSD is calculated over distributions of chosen metrics (parameters or features) extracted from the crops. The metrics may reflect properties of the objects in a spatial domain and/or a frequency domain. Accordingly, the similarity may be indicative of a similarity of the crops in a spatial domain and/or a frequency domain. The properties, for example, comprise the aspect ratio (AR) (spatial domain), which quantifies the size information, the mean of the 2D discrete cosine transform (DCT) coefficients scaled by an orthogonal transformation, capturing object-specific features, and the mean value of the flattened 3D color histogram (CH) (frequency domain), depicting the distribution of pixel intensities. In summary, the objects of each class are represented by information such as color, texture, and shape.

The multivariate JSD is calculated as follows. Assume two multivariate normal distributions $P$ and $Q$ with means $\mu^{(P)}$, $\mu^{(Q)}$ and covariances $\Sigma^{(P)}$ and $\Sigma^{(Q)}$ denoted $\mathcal{N}(\mu^{(P)}, \Sigma^{(P)})$ and $\mathcal{N}(\mu^{(Q)}, \Sigma^{(Q)})$, respectively. Then, the JSD between $P$ and $Q$ is defined by $\mathrm{JSD}(P\|Q) = \frac{1}{2}(\mathrm{KL}[P\|M] + \mathrm{KL}[Q\|M])$, where M is the average distribution $M = \frac{1}{2}(P + Q)$ and KL[P\|Q] is the Kullback-Leibler (KL) divergence of $P$ from $Q$. It is noted that alternatively other examples of distributions, divergences, uncertainty measures may be used instead of the JSD, KL, normal distribution, etc.

To calculate the similarity, it is proposed to sign the extracted object crops from the two sets of images $P$ and $Q$ to their respective object classes., AR, DTC, and CH are calculated for the crops, resulting in 1/3-class distribution for each metric. A joint multivariate normal distribution over the three dimensional vector $(AR, DTC, CH)^T$ for each class $j$ with $j =$ 1, ..., $c$ is assumed, which is denoted as $\mathcal{N}(\mu_j^{(P)}, \Sigma_j^{(P)})$ and $\mathcal{N}(\mu_j^{(Q)}, \Sigma_j^{(Q)})$ for $P$ and $Q$, respectively. To allow the simultaneous comparison of multiple active learning methods to each other, and therefore multiple training sets, it is proposed to calculate the similarity (score) between $k$ sets $P_m$ and $Q$ for $m = 1$, ..., $k$ and $k \geq 1$ as:

$$s(P_m||Q) = \left( \frac{1}{c} \sum_{j=1}^{c} w_j (\text{JSD}(\hat{P}_m||\hat{Q}) + r_j^{(P_m)}) \right)^{-1}$$

with $r_j^{(P_m)}$ being the sigmoid smoothed ratio of class count $n_j$ for a class $j$. For smoothing, it is proposed to use the first-degree Taylor polynomial $T_1(x) = \frac{1}{2} + \frac{1}{4}x$ as a linear approximation of the sigmoid function around the point $x = 0$. This approximation retains sensitivity to changes in the ratios while preserving the well-known smoothing properties of the sigmoid, which may be beneficial for ensuring numerical stability and avoiding extreme values. Meanwhile, $\beta^{(P_m)}$ addresses significant differences in the detection counts among the $k$ sets fire the ratio between the detection count $n_{\text{det}}^{(P_m)}$ of each set $P_m$ and the 25th percentile (Q1) of all $n_{\text{det}}$ across the $k$ sets, denoted $Q_{1_{m=1}^{k}}(n_{\text{det}}^{(P_m)})$. This may be the case when $X_{val}$ it is one of the $k$ sets being compared to $X_{test}$ alongside its subsets $X_{val,subset}$.

$$r_j^{(P_m)} = \frac{1}{4} \cdot \beta^{(P_m)} \cdot \frac{n_j^{(P_m)}}{n_j^{(Q)}} + \frac{1}{2}, \qquad \beta^{(P_m)} = \max\left(1, \frac{n_{\text{det}}^{(P_m)}}{Q_{1_{m=1}^{k}}(n_{\text{det}}^{(P_m)})}\right)$$

The class weights $w_j$ represent the average class proportion across $k$ comparison sets relative to the reference set $Q$. This may ensure that classes with higher detection counts on average carry more weight in the final metric for each set. However, class waiting may only benefit in the case of strong class in balance. Therefore, in some embodiments, it is only applied if the coefficient of variation $\text{CV}_w = \frac{\sigma_w}{\mu_w}$ exceeds a predefined threshold $C_{\text{CV}_w}$ Based on the class distribution, with $w = (w_1, w_2, ..., w_c)^T$, the mean $\mu_w$, and the standard deviation $\sigma_w$. If class waiting is applied, classes with a small weight $w_j < Q1(\mathbf{w})$ may be filtered out from the comparison due to their small contribution to the similarity.

$$w_j \begin{cases} 1 & \text{if } \text{CV}_w \leq C_{\text{CV}_w} \\ \frac{1}{k} \sum_{m=1}^{k} \frac{n_j^{(P_m)}}{n_{\text{det}}^{(P_m)}} & \text{otherwise} \end{cases}$$

Data pruning for diversity

A skilled person having benefit from the present disclosure will understand that the proposed approach works more reliably for diverse data sets, e.g., If the training data set and the reference data set include (mainly or only) dissimilar images, e.g., images of different traffic scenes. Accordingly, similar images and a data sets may be identified and only one of the images similar to each other may be kept for the comparison of the data sets.

Active learning scoring strategies

As discussed above, it is proposed to select multiple uncertainty-based active learning strategies (e.g., different training data sets) and investigate their performance and correlation based on the similarity.

## Uncertainty estimation

For the comparison of active learning strategies, it is proposed to estimate epistemic classification ($\sigma_{ep,cls}$) and localization ($\sigma_{ep,loc}$) uncertainties. For this, it is proposed to implement a 2D spatial Monte Carlo (MC) dropout with a dropout rate of 0.05 and 10 MC samples based on past performance. To estimate the aleatoric uncertainty ($\sigma_{al}$), one may use loss attenuation (LA) in a localization had only, as it already covers the aleatoric uncertainty for object. It is further proposed to extract and apply soft-max on predicted classification budgets to calculate and entropy ($\sigma_{ent}$) as

$$\sigma_{ent} = -\sum_{l=1}^{c} p_l \log_2 p_l$$

over confidences $p_l$ of the $c$ classes. One can use isotonic regression per-class to calibrate $\sigma_{cls}$ and per-class and per-coordinate for $\sigma_{loc}$, and denoted them with the subscript *"cal"*. $\sigma_{loc}$ is also a normalized

via $\dfrac{\sigma_{loc}}{\text{width or height}}$ depending if it corresponds to a y- or x-coordinate. The uncertainties for object are

$$\sigma_{loc} = \frac{1}{4}\sum_{i=0}^{4} \sigma_{loc,i}$$ and $$\sigma_{cls} = \frac{1}{c}\sum_{i=1}^{c}(c_{cls,i})$$ for $i \in [1, c]$ with $c$ classes.

## Training variants

Different strategies are compared based on the uncertainties and the one having the maximum uncertainty is selected. The uncertainties include $\sigma_{ep} = \sigma_{ep,cls} + \sigma_{ep,loc}$, $\sigma_{ep} - \sigma_{al}$, $\sigma_{ent} + \sigma_{al}$, and a calibrated version of each uncertainty $\sigma$. Summations are achieved after first min-max scaling each term. Embodiments of the proposed approach use top-k of a maximum per-image for aggregation as max outperforms mean and sum, and top-k outperforms bottom-k. Additionally, the n-bins formulation is tested by dividing the scores space into equal-sized bins and quarrying from the top (n-1) bins (exploration) and last been (exploitation). We select $n = 5$.

## Class balancing

The class-specific similarity may be weighted based on an occurrence rate of a respective object class. To reduce a negative impact of rare object classes.

Given the significant class in balance present in real-world data sets, embodiments suggest weighting an active learning scoring function for the proposed similarity-based assessment of different training data sets based on a class count (e.g., depending on an occurrence frequency of object classes in training data set).

It aims to enhance the representation of underrepresented classes by considering proportion of each class in the predictions made on $X_u^i$ at iteration $i$. For that, it is proposed to construct a c-dimensional vector $$W_{cb,j} = \frac{1}{N}\sum^{N}\frac{n_{det}}{n_j}$$ representing the weight for each class $j = 1, ..., c$, with the total number of images $N$ and the number of classes $c$. A class distribution score per image can be calculated for the example of $$\sigma_{ent,cb} = \sigma_{ent} \cdot \frac{1}{c_{im}}\sum_{j=1}^{c_{im}} W_{cb,j}$$ for $c_{im}$ occurring classes and that prospective image.

## Pool pruning

As mentioned above, it is also proposed to prune redundant data samples/images from the pool $D_{pool}$ before active learning. For that, embodiments suggest leveraging the proposed concept of similarity and its relationship with the informativeness of a sample. Given that at the start lower labels are available, one can use perceptual hash values of the images as proxy. To identify and prune redundant images, it is proposed to construct a Hamming distance square matrix $D$ between all the images. One can then manually define a threshold $C_H$, relative to the maximum distance in the pool max ($D$), below which two images are considered similar. For each group of images that are clustered together due to their low inter-image distances, one can randomly select what image to represent the group and prune the rest. Therefore, by eliminating a subset of the images from $D_{pool}$, only dissimilar and divers images are retained in order to reduce computational costs. The threshold can be adjusted to reflect the available computing resources.

In this way, an object class is disregarded if a respective occurrence rate is less than a predefined threshold.

In summary, the present disclosure suggests an approach that aims to align the training and evaluation strategies in active learning (AL) under the concept of similarity. It addresses two significant drawbacks, which are excessive computational overhead and the potential of unreliable evaluation results. Present disclosure connects the objective of AL of maximizing informativeness to maximizing the similarity between the selected set and the entire pool. Furthermore, the proposed approach may include class balancing, and calibration, for the use-case of real-world object detection. The present disclosure shows that uncertainty is a useful indication of informativeness if it is reliable and considers the class distribution, which directly correlates with increasing the similarity of the selected set based on uncertainty to the pool.

So, the present approach helps to select an appropriate training data set. Accordingly, the proposed method may comprise selecting, based on the similarity (e.g., the AL scoring function), a training data set for active learning and training an object detector based on the selected training data set using active learning. In doing so, the proposed approach leads to a more efficient training. In this way, object detectors can be trained more use-case-oriented for a better performance in the desired use case. In automotive applications, this, e.g., provides a more reliable detection and/or classification of objects. Accordingly, a vehicle using the object detection and/or classification may be able to maneuver through the environment more safely.

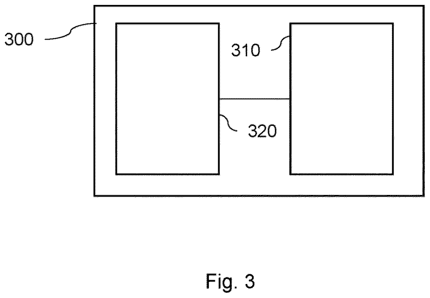

As the skilled person will appreciate, the proposed approach may be also implemented in an apparatus, as outlined in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of an ADS (autonomous/assisted driving system).

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A method (100) for active learning for an object detector, wherein the method comprises:

   obtaining (110) a training data set for training the object detector;

obtaining (120) a reference data set for testing the trained object detector; and
determining (130) a similarity of the training data set and the reference data set to estimate a performance of the object detector for the reference data set.

2. The method (100) of claim 1, wherein the method further comprises predicting a performance of the trained object detector for the reference data set based on the similarity.

3. The method (100) of claim 1 or 2, wherein obtaining the similarity comprises obtaining one or more crops of one or more object classes in the training data set and the reference data set, and wherein the similarity is indicative of a similarity of crops of the same object class.

4. The method (100) of claim 3, wherein the similarity is indicative of a similarity of the crops in a spatial domain and/or a frequency domain.

5. The method (100) of claim 3 or 4, wherein the similarity is indicative of a similarity of a class distribution/count ratio, an aspect ratio, a color histogram, and/or a discrete cosine transform of the crops.

6. The method (100) of any one of the preceding claims, wherein the similarity is indicative of a class-specific similarity.

7. The method (100) of claim 6, wherein the class-specific similarity is weighted based on an occurrence rate of a respective object class.

8. The method (100) of claim 7, wherein an object class is disregarded if a respective occurrence rate is less than a predefined threshold.

9. The method (100) of any one of the preceding claims, wherein the method is applied for multiple training data sets, and wherein the method further comprises selecting, based on the similarity, a training data set for active learning.

10. The method (100) of any one of the preceding claims, wherein the method further comprises selecting from the reference data set, based on the similarity, a subset of samples for estimating a performance of the object detector.

11. A computer program comprising instructions which, when the computer program is executed by a computer, cause the computer to carry out the method (100) of any one of the claims 1 to 10.

12. A computer-readable data carrier having stored thereon the computer program of claim 11.

13. An object detector obtainable by a method (100) according to any one of the preceding claims.

14. Data obtainable by a method according to any one of the claims 1 to 10.

15. An apparatus (300) comprising:

one or more interfaces (310) for communication; and
a data processing circuit (320) configured to execute the method (100) of any one of the claims 1 to 10.

100

| Obtaining a training data set | — 110 |

↓

| Obtaining a reference data | — 120 |

↓

| Determining a similarity of the training data set and the reference data | — 130 |

Fig. 1

Fig. 2

Fig. 3

Europäisches
Patentamt

European
Patent Office

Office européen
des brevets

# EUROPEAN SEARCH REPORT

**Application Number**

EP 24 19 7463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG LIANG ET AL: "MUS-CDB: Mixed Uncertainty Sampling with Class Distribution Balancing for Active Annotation in Aerial Object Detection", ARXIV.ORG, CORNELL UNIVERSITY LIBRARY, 201 OLIN LIBRARY CORNELL UNIVERSITY ITHACA, NY 14853, 6 December 2022 (2022-12-06), XP091387809, * abstract * * page 2 - page 8 * * Title; figures 3, 4 * | 1-15 | INV. G06N3/091 G06N20/00 |
| X | CHENHONGYI YANG ET AL: "Plug and Play Active Learning for Object Detection", ARXIV.ORG, CORNELL UNIVERSITY LIBRARY, 201 OLIN LIBRARY CORNELL UNIVERSITY ITHACA, NY 14853, 21 November 2022 (2022-11-21), XP091374939, * abstract * * Title; figures 3, 6 * * page 2 - page 4 * * page 6 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 28 January 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)